# FASCICULE DE BREVET EUROPEEN

(11) **EP 4 423 562 B1**
(45) Date de publication et mention de la délivrance du brevet: **22.07.2026**
(21) Numéro de dépôt: 22800600.3
(22) Date de dépôt: 28.09.2022
(51) Int. Cl.: G02B 27/01

(54) **DISPOSITIF DE GÉNÉRATION D'IMAGES**
BILDERZEUGUNGSVORRICHTUNG
IMAGE-GENERATING DEVICE

(30) Priorité: 28.10.2021 FR 2111506
(43) Date de publication de la demande: 04.09.2024
(73) Titulaire: Valeo Comfort and Driving Assistance, 94000 Créteil (FR)
(72) Inventeur: BEN NACHOUANE, Ayoub, 94000 Créteil (FR); DELPIERRE, Laurent, 94000 Créteil (FR)
(74) Mandataire: Delplanque, Arnaud
(86) Numéro de dépôt international: PCT/EP2022/077060
(87) Numéro de publication internationale: WO 2023/072520

(56) Documents cités:
- DE-A1- 102018 126 476
- US-A1- 2016 161 742

## Description

### Domaine technique

La présente invention concerne le domaine technique des systèmes d'affichage, notamment le domaine technique des systèmes de projection d'images.

L'invention concerne tout particulièrement un dispositif de génération d'images et un afficheur tête haute comportant un tel dispositif et notamment adapté à une utilisation dans un véhicule automobile.

### Arrière-plan technologique

Dans le domaine ci-dessus, un afficheur tête haute est un dispositif qui permet d'afficher des informations d'assistance à la conduite dans le champ de vision du conducteur.

A cette fin, les afficheurs tête haute comprennent un dispositif de génération d'images, par exemple une source lumineuse couplée à une matrice d'éléments à transmittance variable, par exemple un écran à cristaux liquide (LCD, pour « Liquid Crystal Display » selon la terminologie anglo-saxonne), et un système optique de transmission des images vers une lame partiellement-transparente, par exemple afin que le conducteur puisse voir les images sans détourner le regard de la route.

Un dispositif de génération d'images est connu à partir du document DE 10 2018 126 476 A1.

Afin de générer une image de bonne qualité, les afficheurs tête haute comportent de nombreux éléments optiques (réflecteur, diffuseur), thermiques (dissipateur) et mécaniques, dont l'assemblage peut être complexe.

### Résumé de l'invention

Afin de remédier au problème susmentionné de l'état de la technique, il est proposé un afficheur tête haute permettant un assemblage simple des différents éléments qui le compose.

Selon un aspect de l'invention, il est proposé un dispositif de génération d'images comportant une source de lumière configurée pour émettre un faisceau lumineux, un réflecteur configuré pour réfléchir le faisceau lumineux vers une matrice d'éléments à transmittance variable, et un couvercle de protection de la matrice d'éléments à transmittance variable fixé à la matrice d'éléments à transmittance variable, caractérisé en ce que le dispositif comporte un boîtier principal configuré pour être fixé à un support de la source de lumière, la source de lumière et le réflecteur étant maintenu par serrage entre le support et le boîtier principal fixé au support, la matrice d'élément à transmittance variable étant maintenue par serrage entre le boîtier principal et le couvercle de protection fixé au boîtier principal.

La fixation des pièces du dispositif par serrage permet avantageusement de réduire le nombre d'éléments de fixation et donc de simplifier le montage du dispositif.

Selon un mode de réalisation, la surface externe du boîtier principal comporte des rainures de centrage externes, le couvercle de protection comportant des pattes de centrage chacune configurées pour s'insérer dans une rainure de centrage externe correspondante.

Ainsi, grâce aux rainures de centrage, l'alignement des éléments du dispositif entre eux est assuré, ce qui simplifie encore davantage l'assemblage du dispositif.

Selon un mode de réalisation, le réflecteur est configuré pour être inséré dans le boîtier principal, un diffuseur étant placé dans le boîtier principal et maintenu par serrage entre le réflecteur et une surface interne du boîtier principal.

Selon un mode de réalisation, une face externe du boîtier principal comporte un logement configuré pour recevoir un diffuseur, le diffuseur étant maintenu par serrage entre le boîtier principal et la matrice d'éléments à transmittance variable.

Selon un mode de réalisation, la surface interne du boîtier principal comporte des rainures de centrage, le réflecteur comportant des pattes de centrages réalisées sur sa surface externe et chacune configurée pour s'insérer dans une rainure de centrage interne correspondante.

Selon un mode de réalisation, le dispositif comporte un dissipateur thermique maintenu par serrage entre le boîtier principal et la matrice d'éléments à transmittance variable.

Selon un mode de réalisation, une face du boîtier principal comporte une pluralité de pions de centrage, le dissipateur thermique étant configuré pour être maintenu par serrage autour des pions de centrage.

Selon un mode de réalisation, le boîtier principal est réalisé dans un matériau présentant une conductivité thermique supérieure ou égale à 20 W.m⁻¹.K⁻¹.

Ainsi, il est possible de s'affranchir d'un dissipateur thermique supplémentaire, ce qui permet un encombrement réduit du dispositif.

Selon un mode de réalisation, la paroi du boîtier principal comporte une pluralité d'ailettes.

Selon un mode de réalisation, le boîtier principal est couplé à un module de refroidissement par convection forcée.

Selon un mode de réalisation, le boîtier principal est fixé au support à l'aide d'une vis.

Selon un mode de réalisation, le couvercle de protection est fixé au boîtier par clippage.

Selon un mode de réalisation, le couvercle de protection est fixé au boîtier à l'aide d'une vis.

Selon un autre aspect, il est proposé un afficheur tête haute, notamment pour véhicule automobile, comportant un dispositif de génération d'image selon l'invention.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Brève description des figures

De plus, diverses autres caractéristiques de l'invention ressortent de la description annexée effectuée en référence aux dessins qui illustrent des formes, non limitatives, de réalisation de l'invention et où :
[Fig. 1] illustre schématiquement un afficheur tête haute comportant un dispositif de génération d'images selon un mode de réalisation de l'invention,
[Fig. 2] est une vue éclatée d'un dispositif de génération d'images selon un mode de réalisation de l'invention,
[Fig. 3] illustre un dissipateur thermique pour un dispositif de génération d'images selon l'invention,
[Fig. 4] est une vue éclatée d'un dispositif de génération d'images selon un autre mode de réalisation de l'invention,
[Fig. 5] est une vue éclatée d'un dispositif de génération d'images selon un autre mode de réalisation de l'invention,
[Fig. 6] illustre des variantes de réalisation du dissipateur thermique de la figure 3.

Il est à noter que sur ces figures les éléments structurels et/ou fonctionnels communs aux différentes variantes peuvent présenter les mêmes références.

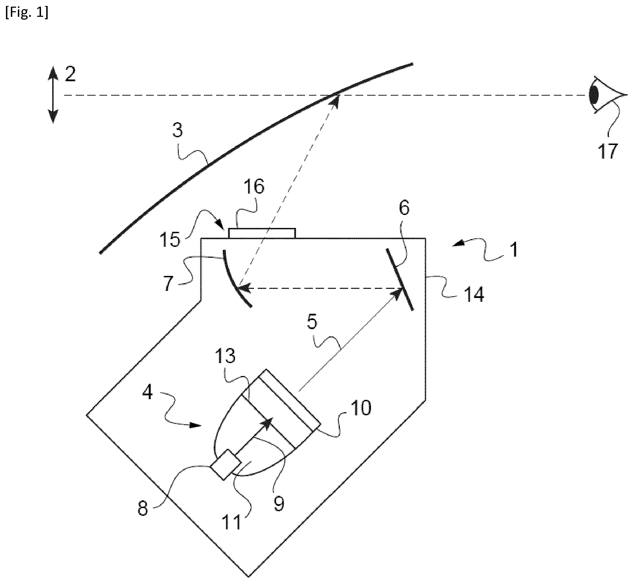

Sur la figure 1, on a représenté schématiquement les éléments principaux d'un afficheur tête haute 1, destiné par exemple à équiper un véhicule, notamment un véhicule automobile.

Un tel afficheur 1 est adapté à créer une image virtuelle 2 dans le champ de vision d'un conducteur du véhicule, de sorte que le conducteur puisse voir cette image virtuelle 2 et les informations éventuelles qu'elle contient sans avoir à détourner le regard.

A cet effet, l'afficheur 1 comprend une lame partiellement transparente 3 placée dans le champ de vision du conducteur, un dispositif de génération d'images 4 adapté à générer un faisceau lumineux aval 5 et un dispositif de projection 6, 7 adapté à renvoyer, en direction de ladite lame partiellement transparente 3, le faisceau lumineux aval 5 généré par le dispositif de génération d'images 4.

La lame partiellement transparente 3 est ici confondue avec le pare-brise du véhicule. Autrement dit, c'est le pare-brise du véhicule qui a la fonction de lame partiellement transparente pour l'afficheur tête haute 1. Cette configuration est particulièrement adaptée à la projection d'image en réalité augmentée.

En variante, la lame partiellement transparente pourrait être un combineur, c'est-à-dire une lame partiellement transparente distincte du pare-brise et dédiée à l'afficheur tête haute. Un tel combineur serait placé entre le pare-brise du véhicule et les yeux 15 du conducteur, sur le trajet du faisceau lumineux aval 5.

L'afficheur tête haute 1 comprend ici deux miroirs de repliement 6, 7 agencés de manière à réfléchir le faisceau lumineux aval 5 généré par le dispositif de génération d'images 4 en direction de la lame partiellement transparente 3. Les miroirs de repliement 6 et 7 permettent avantageusement de placer le dispositif de génération d'image 4 dans une configuration dans laquelle il ne fait pas face à la lame partiellement transparente 3 et donc de le placer dans tout endroit adapté, typiquement sous le tableau de bord du véhicule.

Par exemple ici, un premier miroir de repliement 6 est un miroir plan et un deuxième miroir de repliement 7 est un miroir incurvé qui possède une forme optimisée pour produire une image virtuelle de forme adaptée à la lame partiellement transparente 3, ici une forme incurvée, de façon à afficher l'image de manière non déformée. En outre, le deuxième miroir de repliement 7 a une fonction d'agrandissement de l'image générée par la matrice d'éléments à transmittance variable.

Selon d'autres modes de réalisation, le dispositif de projection d'images 4 pourrait comprendre un nombre différent de miroirs et/ou des miroirs ayant des formes différentes, ainsi que d'autres éléments optiques, par exemple une lentille.

Le dispositif de génération d'images 4 comporte une source de lumière 8, ici une matrice de diodes électroluminescentes (LED, pour « Light Emitting Diode » selon l'acronyme anglo-saxon classiquement employé par l'homme du métier), configurée pour produire un faisceau lumineux amont 9, une matrice d'éléments à transmittance variable 10, par exemple ici un écran LCD, configurée pour être éclairée par le faisceau lumineux amont 9 et un réflecteur 11 interposé entre la source de lumière 8 et la matrice d'éléments à transmittance variable 10. Ici, le dispositif de génération d'image 4 comporte un diffuseur optique 13 au travers duquel le faisceau lumineux aval 9 passe avant d'atteindre la matrice d'éléments à transmittance variable.

Au sens de l'invention, les termes « amont » et « aval » sont relatifs à des positions le long du chemin de propagation de la lumière émise par la source lumineuse. Ainsi, le terme « amont » signifie plus proche de la source lumineuse et le terme « aval » signifie plus loin de la source lumineuse, le long du chemin de propagation.

La matrice d'éléments à transmittance variable 10 est configurée pour transmettre sélectivement le faisceau lumineux amont 9 de façon à former le faisceau lumineux aval 5 représentant l'image 2 à projeter dans le champ de vision du conducteur au moyen de la lame partiellement transparente 3.

Le dispositif d'affichage tête haute 1 comprend également un boîtier 14 (généralement opaque) qui renferme le dispositif de génération d'image 4 et le système de projection 6, 7 afin notamment de protéger ces éléments contre d'éventuelles agressions extérieures (poussière, liquides, etc.).

Le boîtier 13 comporte une ouverture 15 à travers laquelle passe le faisceau lumineux aval 5, ici après réflexion sur le deuxième miroir de repliement 7.

L'ouverture 15 du boîtier 13 est fermée par une fenêtre 16 (parfois désignée sous le terme anglo-saxon « cover window ») formée par exemple d'une feuille de matière plastique de type polycarbonate d'épaisseur comprise entre 0,25 mm et 0,75mm.

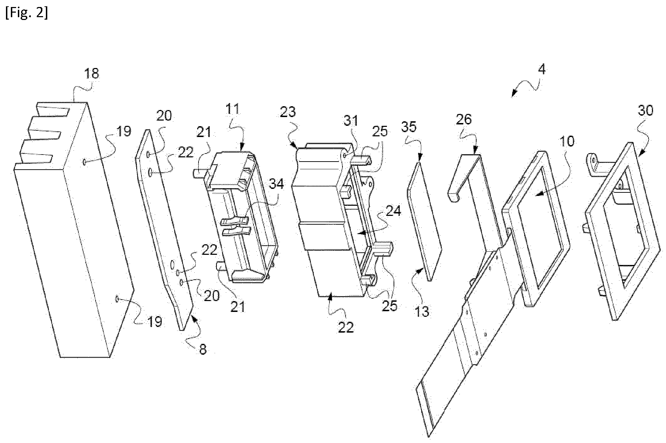

La figure 2 est une vue éclatée en perspective du dispositif de génération d'images 4, qui apparaît de façon plus détaillée que sur la figure 1. Sur la figure 2, différents éléments du dispositif de génération d'images 4 sont représentés éloignés les uns des autres le long de l'axe de propagation du faisceau lumineux.

Le dispositif de génération d'images 4 comporte ici un support 18 de la source de lumière 8, configuré pour recevoir la source de lumière 8. Ici, la source de lumière 8 comporte une carte électronique comportant au moins une diode électroluminescente, par exemple une matrice de diodes électroluminescentes.

Le support 18 est ici un dissipateur thermique passif réalisé dans un matériau thermiquement conducteur et est configuré pour maintenir la température de fonctionnement de la source lumineuse 8 en dessous de ses limites thermiques fonctionnelles, ici en dessous d'une température de 110°C. Ainsi, sa conductivité est supérieure à 20 W.m⁻¹.K⁻¹, et de préférence supérieure à 60 W.m⁻¹.K⁻¹. Par exemple ici, le support 18 est en aluminium et présente une conductivité thermique de 220 W.m¹.K¹.

Le support 18, en tant que dissipateur thermique passif, pourrait comprendre tout autre matériau qui permet de répondre aux exigences de dissipation thermique ci-dessus, par exemple des alliages d'aluminium ou des alliages de magnésium.

La face arrière du support 18, c'est-à-dire la face opposée à celle sur laquelle est fixée la source lumineuse 8, est pourvue d'ailettes qui permettent d'augmenter la surface du premier dissipateur thermique passif 24 qui est en contact avec l'air et donc d'augmenter les échanges thermiques avec l'extérieur.

Deux trous 19 traversants sont ménagés dans le support, par exemple ici des trous adaptés aux passages de vis. Deux trous 20 correspondants sont ménagés dans la carte électronique de la source lumineuse 8, de façon à être positionnés en vis-à-vis des trous traversants 19 du support 18. De préférence, les vis s'insèrent depuis la face arrière du support 18, par exemple entre deux ailettes.

Le réflecteur 11 est directement en contact avec la carte électronique de la source de lumière 8 et se positionne autour de la matrice de diode électroluminescence. Il comporte deux pions de centrage 21 configurés pour s'insérer dans deux trous de centrage 22 ménagés dans la carte électronique de la source de lumière 8, ici des trous borgnes.

Le dispositif 4 comporte en outre un boîtier principal 22 configuré pour être placé en contact avec la carte électronique de la source de lumière 8, autour du réflecteur 11 de façon que le réflecteur 11 soit logé dans le boîtier principal 22.

Le réflecteur 11 comporte ici deux pattes de centrage 34 réalisées sur deux faces externe opposées du réflecteur 11, configurées pour s'insérer dans deux rainures de centrage interne correspondantes ménagées sur des faces internes du boîtier principal 22.

Le boîtier principal 22 comporte deux premiers trous filetés 23 ménagées au niveau de sa face de contact avec la carte électronique de la source de lumière 8 (face amont relativement à la direction de propagation du faisceau), en vis-à-vis des trous traversants 19 et 20, et est fixée au support par l'intermédiaire de vis qui passent dans les trous 19, 20, et 23. De préférence, les vis sont insérées depuis la face arrière du support 18.

Lorsque le boîtier principal 22 est ainsi fixé au support 18, le réflecteur 11 situé dans le boîtier principal 22 et la carte électronique de la source de lumière 8 sont maintenus par serrage entre le support 18 et le boîtier principal 22.

Au niveau de la face aval du boîtier principal 22, la bordure d'une ouverture 24 adaptée au passage du faisceau, ici une ouverture rectangulaire, comporte un épaulement qui forme un logement pour le diffuseur 13. Ainsi, lorsque le diffuseur 13 est placé dans le logement, il est maintenu immobile dans toute direction orthogonale à la direction de propagation du faisceau.

Ici, l'un des angles du diffuseur 13 comporte un chanfrein 35, et l'épaulement formant le logement du diffuseur présente une forme complémentaire de façon à permettre de distinguer la face amont de la face aval du diffuseur 13 lors de son insertion.

Autour de l'ouverture 24, quatre pions de centrage 25 s'étendent depuis le boîtier principal 22 parallèlement à la direction de propagation. Ici, les pions de centrage 25 ont des formes de coins qui épousent les contours de l'ouverture 23 aux niveaux de ses coins.

Dans ce mode de réalisation, le dispositif de génération d'image 4 comporte un dissipateur thermique passif profilé 26 configuré pour être placé entre le boîtier principal 22 et la matrice d'éléments à transmittance variable. Le dissipateur thermique passif profilé 26 est ici réalisé par découpe et pliage d'une bande métallique, dont une tranche amont est en contact avec le diffuseur 13 et une tranche aval est en contact avec la matrice d'éléments à transmittance variable 10.

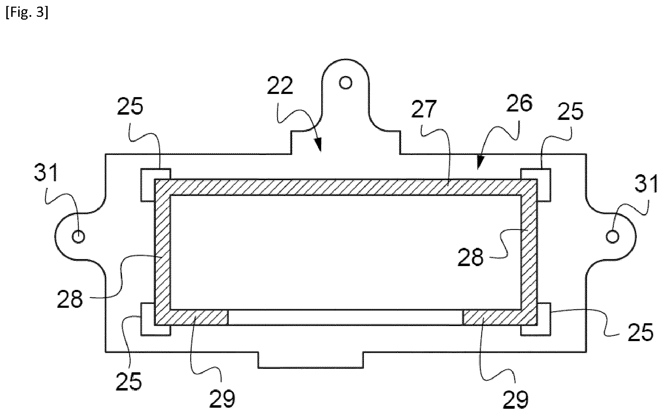

Ici, comme l'illustre la figure 3 qui est une vue de du dissipateur thermique passif profilé 26 en vis-à-vis de sa tranche aval, le dissipateur thermique passif profilé 26 présente une forme globalement rectangulaire de façon à s'insérer de façon ajustée entre les doigts de centrage 25 du boîtier principal. Par exemple ici, le dissipateur thermique passif profilé 26 comporte une portion centrale rectangulaire 27 et deux portions latérales 28 identiques, en forme de trapèzes rectangles, qui s'étendent chacune depuis une extrémité de la portion centrale 27, de façon que les angles droits des trapèzes rectangles soient au niveau de la tranche amont du dissipateur thermique passif profilé 26. Deux pattes 29 s'étendent de façon parallèle à la portion centrale 27, chacune depuis une extrémité d'une portion latérale 28 distincte.

Ici, le dissipateur thermique passif profilé 26 est en aluminium.

Le dispositif de génération d'images 4 comporte en outre un couvercle de protection 30 en contact avec la face aval de la matrice d'éléments à transmittance variable 10, qui comporte des moyens de fixation au boîtier principal 22, ici des vis configurées pour s'insérer dans des deuxièmes trous filetés 31 du boîtier principal 22. En variante, le couvercle de protection 30 peut être fixé au boîtier principal par un système de clipage.

Ainsi, le diffuseur 13, le dissipateur thermique passif 16 et la matrice d'éléments à transmittance variable 10 sont maintenus par serrage entre le boîtier principal 22 et le couvercle de protection 27. En particulier ici, le dissipateur thermique passif profilé 26 est maintenu par serrage entre le diffuseur 13 et la matrice d'éléments à transmittance variable 10.

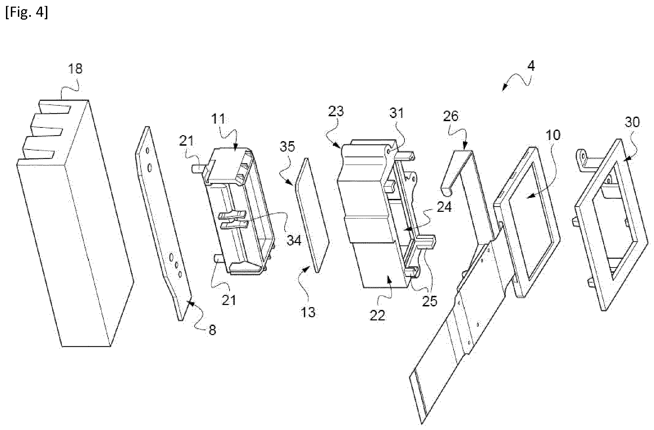

Selon une variante de réalisation illustrée sur la figure 4 le diffuseur 13 est placé à l'intérieur du boîtier principal 22. Ainsi, dans ce mode de réalisation, le diffuseur 13 est maintenu par serrage entre le réflecteur 11 et le boîtier principal 22.

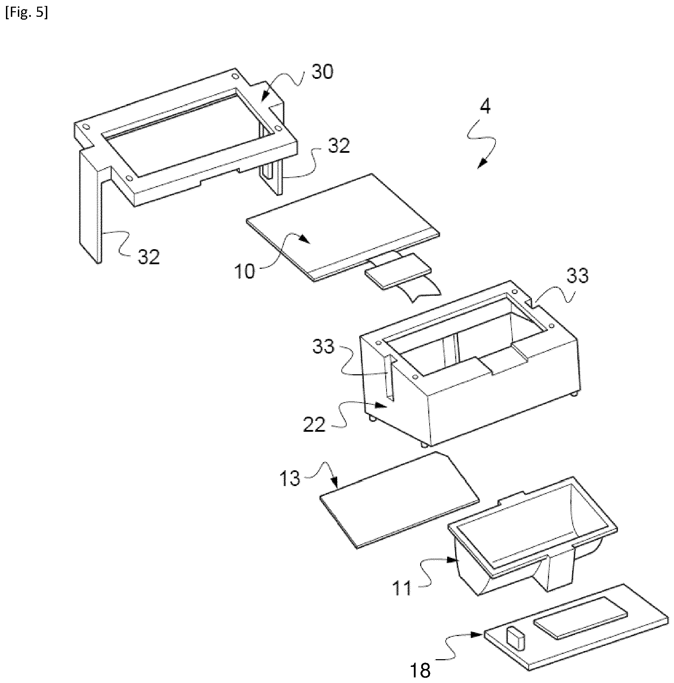

La figure 5 illustre un autre mode de réalisation du dispositif selon l'invention, dans lequel le dispositif de génération d'image comporte un système de centrage du couvercle de protection 30 sur le boîtier principal 22.

Ainsi, le couvercle de protection 30 comporte deux rails de centrage 32 qui s'étendent orthogonalement depuis deux bords opposés du couvercle de protection 30, de façon à s'insérer dans deux rainures 33 correspondantes ménagées dans deux bords opposés du boîtier principal 22.

Le boîtier principal 22 et le couvercle de protection 30 peuvent être réalisés dans tout matériau. Toutefois, dans certains modes de réalisation, afin d'améliorer la dissipation thermique du dispositif de génération d'image 4, le couvercle de protection et/ou le boîtier principal 22 peuvent être réalisé dans des matériaux thermiquement conducteurs, par exemple de l'aluminium. Dans de tels modes de réalisation, la surface externe du boîtier principal 22 peut être pourvue d'ailettes permettant d'augmenter la surface d'échange thermique avec l'environnement, et/ou être couplée à un module de refroidissement actif, par exemple un module de refroidissement par convection forcé comme un ventilateur.

Dans certains de ces modes de réalisation où le boîtier fait office de dissipateur thermique, le dispositif de génération d'images 4 est dépourvu du dissipateur thermique passif profilé 26.

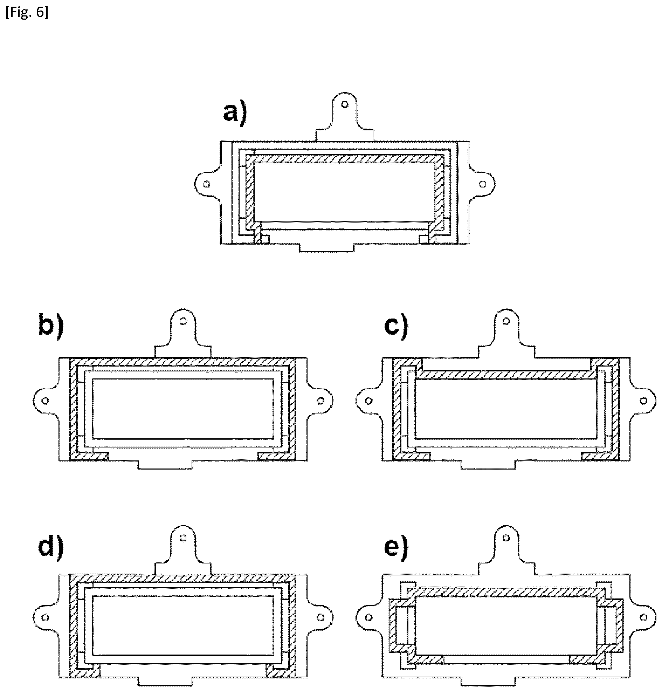

Dans les modes de réalisation décrits précédemment, le dissipateur thermique passif 26 présente une forme globalement rectangulaire. En variante, le dissipateur thermique passif peut présenter d'autres forme, notamment l'une des cinq formes a), b), c), d), e) illustrées sur la figure 6

Diverses autres modifications peuvent être apportées à l'invention dans le cadre des revendications annexées.

## Revendications

1. Dispositif de génération d'images comportant une source de lumière (8) configurée pour émettre un faisceau lumineux (9), un réflecteur (11) configuré pour réfléchir le faisceau lumineux (11) vers une matrice d'élément à transmittance variable (10), et un couvercle de protection (30) de la matrice d'éléments à transmittance variable (10) fixé à la matrice d'éléments à transmittance variable, **caractérisé en ce que** le dispositif comporte un boîtier principal (22) configuré pour être fixé à un support (18) de la source de lumière (8), la source de lumière (8) et le réflecteur (11) étant maintenus par serrage entre le support (18) et le boîtier principal (22) fixé au support (18), la matrice d'éléments à transmittance variable (10) étant maintenue par serrage entre le boîtier principal (22) et le couvercle de protection (30) fixé au boîtier principal (22).

2. Dispositif selon la revendication 1, dans lequel la surface externe du boîtier principal (22) comporte des rainures de centrage externes (33), le couvercle de protection (30) comportant des pattes de centrage (32) chacune configurées pour s'insérer dans une rainure de centrage externe (33) correspondante.

3. Dispositif selon la revendication 1 ou 2, dans lequel le réflecteur (11) est configuré pour être inséré dans le boîtier principal (22), un diffuseur (13) étant placé dans le boîtier principal (22) et maintenu par serrage entre le réflecteur (11) et une surface interne du boîtier principal (22).

4. Dispositif selon l'une quelconque des revendications 1 ou 2, dans lequel une face externe du boîtier principal (22) comporte un logement configuré pour recevoir un diffuseur (13), le diffuseur étant maintenu par serrage entre le boîtier principal (22) et la matrice d'éléments à transmittance variable (10).

5. Dispositif selon l'une quelconque des revendications précédentes, dans lequel la surface interne du boîtier principal (22) comporte des rainures de centrage, le réflecteur (11) comportant des pattes de centrages (34) réalisées sur sa surface externe et chacune configurée pour s'insérer dans une rainure de centrage interne correspondante.

6. Dispositif selon l'une quelconque des revendications précédentes, comportant un dissipateur thermique (26) maintenu par serrage entre le boîtier principal (22) et la matrice d'éléments à transmittance variable (10).

7. Dispositif selon la revendication 6, dans lequel une face du boîtier principal (22) comporte une pluralité de pions de centrage (25), le dissipateur thermique (26) étant configuré pour être maintenu par serrage autour des pions de centrage (25).

8. Dispositif selon l'une quelconque des revendications précédentes, dans lequel le boîtier principal (22) est réalisé dans un matériau présentant une conductivité thermique supérieure ou égale à 20 W.m⁻¹.K⁻¹.

9. Dispositif selon la revendication 8, dans lequel la paroi du boîtier principal (22) comporte une pluralité d'ailettes.

10. Dispositif selon la revendication 8 ou 9, dans lequel le boîtier principal (22) est couplé à un module de refroidissement par convection forcée.

11. Dispositif selon l'une quelconque des revendications précédentes, dans lequel le boîtier principal (22) est fixé au support (18) à l'aide d'une vis.

12. Dispositif selon l'une des revendications précédentes, dans lequel le couvercle de protection (30) est fixé au boîtier principal (22) par clippage.

13. Dispositif selon l'une des revendications précédentes, dans lequel le couvercle de protection (30) est fixé au boîtier principal (22) à l'aide d'une vis.

14. Afficheur tête haute comportant un dispositif de génération d'images (4) selon l'une quelconque des revendications précédentes.

## Patentansprüche

1. Bilderzeugungsvorrichtung mit einer Lichtquelle (8), die konfiguriert ist, um einen Lichtstrahl (9) auszusenden, einem Reflektor (11), der konfiguriert ist, um den Lichtstrahl (11) zu einer Matrix aus Elementen mit variabler Transmittanz (10) zu reflektieren, und einer Schutzabdeckung (30) der Matrix aus Elementen mit variabler Transmittanz (10), die an der Matrix aus Elementen mit variabler Transmittanz befestigt ist, **dadurch gekennzeichnet, dass** die Vorrichtung ein Hauptgehäuse (22) aufweist, das konfiguriert ist, um an einer Halterung (18) der Lichtquelle (8) befestigt zu werden, wobei die Lichtquelle (8) und der Reflektor (11) durch Klemmen zwischen der Halterung (18) und dem an der Halterung (18) befestigten Hauptgehäuse (22) gehalten werden, wobei die Matrix aus Elementen mit variabler Transmittanz (10) durch Klemmen zwischen dem Hauptgehäuse (22) und der am Hauptgehäuse (22) befestigten Schutzabdeckung (30) gehalten wird.

2. Vorrichtung nach Anspruch 1, wobei die Außenfläche des Hauptgehäuses (22) externe Zentriernuten (33) aufweist, wobei die Schutzabdeckung (30) Zentrierlaschen (32) aufweist, die jeweils konfiguriert sind, um in eine entsprechende externe Zentriernut (33) eingeführt zu werden.

3. Vorrichtung nach Anspruch 1 oder 2, wobei der Reflektor (11) konfiguriert ist, um in das Hauptgehäuse (22) eingeführt zu werden, wobei ein Diffusor (13) im Hauptgehäuse (22) platziert und durch Klemmen zwischen dem Reflektor (11) und einer Innenfläche des Hauptgehäuses (22) gehalten wird.

4. Vorrichtung nach einem der Ansprüche 1 oder 2, wobei eine Außenseite des Hauptgehäuses (22) eine Aufnahme aufweist, die konfiguriert ist, um einen Diffusor (13) aufzunehmen, wobei der Diffusor durch Klemmen zwischen dem Hauptgehäuse (22) und der Matrix aus Elementen mit variabler Transmittanz (10) gehalten wird.

5. Vorrichtung nach einem der vorhergehenden Ansprüche, wobei die Innenfläche des Hauptgehäuses (22) Zentriernuten aufweist, wobei der Reflektor (11) Zentrierlaschen (34) aufweist, die auf seiner Außenfläche ausgebildet sind und jeweils konfiguriert sind, um in eine entsprechende innere Zentriernut eingeführt zu werden.

6. Vorrichtung nach einem der vorhergehenden Ansprüche, mit einem Kühlkörper (26), der durch Klemmen zwischen dem Hauptgehäuse (22) und der Matrix aus Elementen mit variabler Transmittanz (10) gehalten wird.

7. Vorrichtung nach Anspruch 6, wobei eine Seite des Hauptgehäuses (22) eine Vielzahl von Zentrierstiften (25) aufweist, wobei der Kühlkörper (26) konfiguriert ist, um durch Klemmen um die Zentrierstifte (25) herum gehalten zu werden.

8. Vorrichtung nach einem der vorhergehenden Ansprüche, wobei das Hauptgehäuse (22) aus einem Material hergestellt ist, das eine Wärmeleitfähigkeit von größer oder gleich 20 W.m-1.K-1 aufweist.

9. Vorrichtung nach Anspruch 8, wobei die Wand des Hauptgehäuses (22) eine Vielzahl von Rippen aufweist.

10. Vorrichtung nach Anspruch 8 oder 9, wobei das Hauptgehäuse (22) mit einem Kühlmodul mit erzwungener Konvektion gekoppelt ist.

11. Vorrichtung nach einem der vorhergehenden Ansprüche, wobei das Hauptgehäuse (22) mit einer Schraube an der Halterung (18) befestigt ist.

12. Vorrichtung nach einem der vorhergehenden Ansprüche, wobei die Schutzabdeckung (30) durch Clipsen am Hauptgehäuse (22) befestigt ist.

13. Vorrichtung nach einem der vorhergehenden Ansprüche, wobei die Schutzabdeckung (30) mit einer Schraube am Hauptgehäuse (22) befestigt ist.

14. Head-up-Display mit einer Bilderzeugungsvorrichtung (4) nach einem der vorhergehenden Ansprüche.

## Claims

1. Image generation device comprising a light source (8) configured to emit a light beam (9), a reflector (11) configured to reflect the light beam (11) towards a variable transmittance element matrix (10), and a protective cover (30) of the variable transmittance element matrix (10) fixed to the variable transmittance element matrix, **characterized in that** the device comprises a main housing (22) configured to be fixed to a support (18) of the light source (8), the light source (8) and the reflector (11) being held by clamping between the support (18) and the main housing (22) fixed to the support (18), the variable transmittance element matrix (10) being held by clamping between the main housing (22) and the protective cover (30) fixed to the main housing (22).

2. Device according to claim 1, wherein the external surface of the main housing (22) comprises external centering grooves (33), the protective cover (30) comprising centering tabs (32) each configured to be inserted into a corresponding external centering groove (33).

3. Device according to claim 1 or 2, wherein the reflector (11) is configured to be inserted into the main housing (22), a diffuser (13) being placed in the main housing (22) and held by clamping between the reflector (11) and an internal surface of the main housing (22).

4. Device according to any one of claims 1 or 2, wherein an external face of the main housing (22) comprises a housing configured to receive a diffuser (13), the diffuser being held by clamping between the main housing (22) and the variable transmittance element matrix (10).

5. Device according to any one of the preceding claims, wherein the internal surface of the main housing (22) comprises centering grooves, the reflector (11) comprising centering tabs (34) made on its external surface and each configured to be inserted into a corresponding internal centering groove.

6. Device according to any one of the preceding claims, comprising a heat sink (26) held by clamping between the main housing (22) and the variable transmittance element matrix (10).

7. Device according to claim 6, wherein a face of the main housing (22) comprises a plurality of centering pins (25), the heat sink (26) being configured to be held by clamping around the centering pins (25).

8. Device according to any one of the preceding claims, wherein the main housing (22) is made of a material having a thermal conductivity greater than or equal to 20 W.m-1.K-1.

9. Device according to claim 8, wherein the wall of the main housing (22) comprises a plurality of fins.

10. Device according to claim 8 or 9, wherein the main housing (22) is coupled to a forced convection cooling module.

11. Device according to any one of the preceding claims, wherein the main housing (22) is fixed to the support (18) using a screw.

12. Device according to any one of the preceding claims, wherein the protective cover (30) is fixed to the main housing (22) by clipping.

13. Device according to any one of the preceding claims, wherein the protective cover (30) is fixed to the main housing (22) using a screw.

14. Head-up display comprising an image generation device (4) according to any one of the preceding claims.
